# FASCICULE DE BREVET EUROPEEN

(11) **EP 0 940 109 B1**
(45) Date de publication et mention de la délivrance du brevet: **07.05.2003**
(21) Numéro de dépôt: 99400508.0
(22) Date de dépôt: 03.03.1999
(51) Int. Cl.: A47J 37/06

(54) **Appareil de cuisson**
Kochgerät
Cooking apparatus

(30) Priorité: 06.03.1998 FR 9802750
(43) Date de publication de la demande: 08.09.1999
(73) Titulaire: Societe D'Innovations Techniques SIT, 86100 Chatellerault (FR)
(72) Inventeur: Garnier, André, 86200 Loudun (FR)
(74) Mandataire: Kaspar, Jean-Georges

(56) Documents cités:
- EP-A- 0 054 160
- WO-A-92/10126
- US-A- 5 019 682
- US-A- 5 428 207
- PATENT ABSTRACTS OF JAPAN vol. 011, no. 327 (M-635), 24 octobre 1987 & JP 62 108927 A (MATSUSHITA ELECTRIC IND CO LTD), 20 mai 1987

## Description

L'invention concerne un appareil de cuisson du genre gril ou crêpière comportant une plaque de cuisson portée par un châssis de support métallique.

La plaque de cuisson est généralement en fonte et chauffée par un élément chauffant constitué par une résistance électrique en forme de serpent ou de spirale. Cet élément chauffant est disposé directement en dessous de la plaque, en contact direct avec celle-ci, et la plaque repose sur un cadre du châssis. L'élément chauffant est relié à un circuit électrique d'alimentation intégré dans l'appareil et pouvant être branché sur le réseau électrique.

Le document EP 0 054 160 décrit un appareil électrique de cuisson comportant des supports verticaux de gaine de résistance électrique.

Afin d'éviter un réchauffement excessif du châssis et le risque de brûlures qui pourraient en résulter pour les personnes susceptibles de venir en contact avec le châssis, il est nécessaire de prévoir des isolants, habituellement en laine de verre, entre l'élément chauffant et le châssis. De tels appareils de cuisson sont bien connus dans la technique et ne seront pas décrits davantage ici.

Un premier but de l'invention est de proposer des moyens permettant d'obtenir une température homogène de l'ensemble de la plaque de cuisson.

Un deuxième but de l'invention est de proposer dans le cas de dysfonctionnement, l'échange facile de la sonde de température d'un thermostat dont est habituellement équipé tout appareil du genre mentionné pour éviter la surchauffe de la plaque de cuisson et pour permettre le réglage de la température de cuisson. Généralement, cette sonde de température est placée à l'intérieur de la plaque de cuisson, ce qui nécessite le démontage complet de la partie supérieure de l'appareil pour avoir accès à la sonde.

Un troisième but de l'invention est de proposer des moyens permettant d'assurer une ventilation telle du châssis qu'elle permette de supprimer les isolants afin d'obtenir une structure du châssis exclusivement métallique, ce qui est très important pour faciliter le nettoyage et améliorer l'hygiène, surtout dans le cas des appareils qui sont utilisés dans des services saisonniers et qui sont stockés pendant de longues périodes.

Les moyens proposés par l'invention sont par ailleurs très simples et faciles à fabriquer tout en étant extrêmement fiables.

L'objet de l'invention est un appareil de cuisson comportant un châssis de support portant une plaque de cuisson associée à un élément chauffant disposé en dessous de celle-ci, l'élément chauffant étant constitué par une résistance électrique et étant relié à un circuit électrique d'alimentation pouvant être branché sur le réseau électrique en vue de l'alimentation de l'élément chauffant pour chauffer la plaque de cuisson afin de permettre la cuisson d'aliments disposés sur la plaque, caractérisé en ce que l'élément chauffant repose sur une plaque auxiliaire et se trouve pris entre la plaque de cuisson et cette plaque auxiliaire reposant sur le châssis, et en ce que la plaque de cuisson et la plaque auxiliaire sont réalisées dans des matériaux présentant des caractéristiques de dilatation thermique voisines et sont sensiblement de même épaisseur, et en ce que l'espace entre les deux plaques est fermé tout en gardant un léger jeu pour faciliter l'enlèvement de la plaque de cuisson. Selon d'autres caractéristiques de l'invention
- la plaque de cuisson est sur sa face tournée vers la plaque auxiliaire pourvue d'une jupe refermant la périphérie de l'espace entre les deux plaques ;
- la plaque de cuisson est posée sur l'élément chauffant de manière détachable ;
- dans l'appareil, la température de la plaque est réglée à l'aide d'un thermostat pourvu d'une sonde de température et la sonde de température est disposée entre les deux plaques ;
- la sonde de température est disposée au moins partiellement dans un logement pratiqué dans la plaque de cuisson ;
- le châssis est en forme de boîte comportant sur sa face inférieure des orifices d'entrée d'air et sur sa face supérieure des orifices de sortie d'air ;
- un plateau formant déflecteur est disposé entre la plaque auxiliaire et la face supérieure du châssis ;
- le châssis comporte une double paroi latérale, l'espace délimité entre les parois de celle-ci communiquant avec les orifices d'entrée et de sortie d'air ;
- la double paroi est constituée par une virole externe et une virole interne, la virole interne ayant une hauteur inférieure à ccile de la virole externe afin de permettre à l'air de circuler aussi bien dans l'espace délimité entre les parois que dans l'espace à l'intérieur du châssis, de l'autre côté de la virole interne ;
- une pluralité d'orifices de sortie d'air est disposée dans une zone centrale d'une paroi supérieure du châssis ;
- les orifices d'entrée d'air comprennent une fente ménagée sur la face inférieure du châssis et s'étendant parallèlement au contour de cette face inférieure, et les orifices de sortie d'air comprennent une fente ménagée sur la face supérieure du châssis et s'étendant parallèlement au contour de cette face supérieure ;
- les orifices d'entrée d'air comprennent des fentes ménagées dans une paroi inférieure du châssis.

L'invention sera maintenant décrite plus en détail à l'aide d'exemples non limitatifs de quelques modes de réalisation, en référence aux figures dans lesquelles :
- les figures 1 et 2 représentent, en une vue latérale respectivement en coupe, un premier mode de réalisation de l'invention ;
- la figure 3 représente, en une vue en coupe, un deuxième mode de réalisation de l'invention.

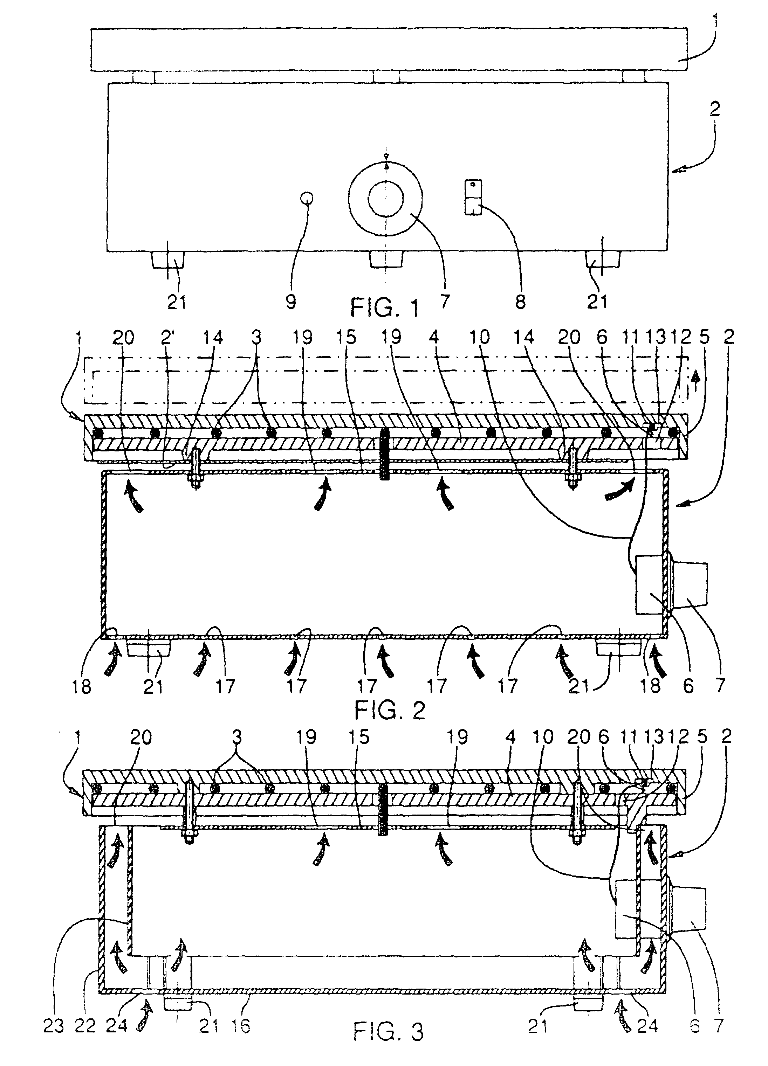

Les figures 1 et 2 montrent un appareil de cuisson comportant une plaque de cuisson en fonte 1 portée par un châssis de support métallique 2 et chauffée par un élément chauffant 3 constitué par une résistance électrique ayant une forme en spirale. L'élément chauffant est de manière connue en soi relié à un circuit d'alimentation (non représenté) pouvant être connecté au réseau électrique.

L'élément chauffant 3 repose sur une plaque auxiliaire 4 également en fonte et se trouve pris entre celle-ci et la plaque de cuisson 1. La plaque de cuisson 1 et la plaque auxiliaire 4 présentent sensiblement la même épaisseur. La plaque de cuisson 1 comporte une jupe 5 refermant la périphérie de l'espace délimité entre les deux plaques 1 et 4. La forme et la dimension interne de la jupe 5 sont adaptées à la forme et la dimension du rebord de la plaque auxiliaire 4 de manière à présenter une concordance de forme pour fermer l'espace entre les deux plaques tout en gardant un léger jeu pour faciliter l'enlèvement de la plaque de cuisson qui repose tout simplement sur l'élément chauffant 3 sans y être fixée.

La disposition relative de la plaque de cuisson 1 et de la plaque auxiliaire 4 permet la création d'une enceinte thermique homogène, conduisant à une optimisation de la répartition de chaleur.

L'appareil de cuisson est de manière connue en soi pourvu d'un thermostat 6 pour couper l'alimentation de l'élément chauffant 3 lorsqu'une température prédéterminée a été atteinte. Des températures différentes peuvent être choisies à l'aide d'une manette de réglage 7 disposée à l'extérieur du châssis de support 2 où se trouvent également disposés d'autres moyens de commande et de contrôle comme un interrupteur de mise sous tension 8 et un voyant 9 qui indique que l'appareil est en fonctionnement.

Un fil conducteur 10 relie le thermostat 6 à une sonde de température 11, en passant par un trou traversant 12 ménagé dans la plaque auxiliaire 4. La sonde est ainsi disposée entre la plaque de cuisson 1 et la plaque auxiliaire 4, et se trouve de préférence partiellement dans un logement 13 constitué par une rainure ménagée dans la face inférieure de la plaque de cuisson 1.

Si l'on a besoin de changer la sonde de température 11, il suffit de soulever la plaque de cuisson détachable 1 comme cela est montré en lignes mixtes sur la figure 2, afin d'avoir accès à la sonde.

Le châssis de support a la forme d'une boîte et pour faire obstacle à la transmission de chaleur par conduction à partir de la plaque auxiliaire vers les parois latérales du châssis, la plaque auxiliaire 4 repose sur le châssis ponctuellement par des supports 14 régulièrement répartis sur la face inférieure de la plaque auxiliaire. Un plateau formant déflecteur 2' est dans ce même but disposé immédiatement en dessous de la plaque auxiliaire 4, entre celle-ci et la paroi supérieure 15 du châssis.

Pour éviter davantage une température excessive dans les parois latérales du châssis, celui-ci comporte des orifices d'entrée et de sortie d'air de ventilation.

Ainsi la paroi inférieure 16 formant fond du châssis 2 est pourvue d'un certain nombre de fentes 17 constituant des orifices d'entrée d'air. Ces fentes peuvent être parallèles les unes aux autres et régulièrement réparties sur la paroi inférieure. En plus, une fente périphérique d'entrée d'air 18 est délimitée entre la paroi latérale du châssis et la paroi inférieure 16 de celui-ci. Cette fente suit le contour du rebord de cette paroi inférieure.

La paroi supérieure 15 du châssis 2 est pourvue d'une pluralité d'orifices de sortie d'air 19 régulièrement disposés dans une zone centrale de la paroi supérieure et une fente périphérique de sortie d'air 20, analogue à la fente périphérique d'entrée d'air 18, est délimitée entre la paroi latérale du châssis et la paroi supérieure 15 de celui-ci. Dans le cas d'une crêpière, la paroi latérale est d'habitude cylindrique et les fentes périphériques 18 et 20 sont par conséquent circulaires.

Par ailleurs, afin de permettre le libre accès de l'air externe aux orifices d'entrée d'air, le châssis se trouve disposé sur des pieds 21 de sorte qu'un interstice soit créé entre le support sur lequel est posé l'appareil et la paroi inférieure du châssis. Lors du fonctionnement de l'appareil l'air réchauffé va ainsi monter par convection à l'intérieur du châssis et de l'air moins chaud sera aspiré par les orifices d'entrée d'air, comme cela est montré par des flèches sur la figure 2. L'air réchauffé va ensuite sortir par les orifices de sortie d'air à la face supérieure du châssis.

La figure 3 montre un deuxième mode de réalisation de l'appareil de cuisson suivant l'invention. Les éléments en commun ne seront pas décrits en détail et ils porteront les mêmes numéros de référence. Dans ce mode de réalisation, le déflecteur 2' du premier mode de réalisation a été supprimé et la paroi latérale du châssis est effectuée sous forme d'une double paroi constituée d'une virole externe 22 et d'une virole interne 23.

L'espace entre la virole externe et la virole interne communique en bas avec un orifice d'entrée d'air sous forme d'une fente 24 s'étendant parallèlement au contour de la paroi inférieure 16 et en haut avec un orifice de sortie d'air sous forme d'une fente périphérique 20. Tout comme dans le premier mode de réalisation, des orifices de sortie d'air 19 sont ménagés dans une zone centrale de la paroi supérieure 15 du châssis.

La virole interne 23 présente une hauteur inférieure à celle de la virole externe de manière à former en bas un passage permettant à l'air de circuler dans l'espace se trouvant à l'intérieur du châssis, de l'autre côté de la virole interne. La circulation ainsi obtenue est indiquée par des flèches à la figure 3.

Grâce aux barrières thermiques et à cette ventilation par convection, la température de la paroi latérale ou de la virole externe du châssis peut être maintenue à un niveau qui élimine les risques de brûlure si une personne vient accidentellement en contact avec celle-ci.

L'agencement selon l'invention permet d'obtenir un châssis sans matières isolantes, ce qui facilite la fabrication, le nettoyage et le maintien d'un niveau hygiénique élevé.

## Revendications

1. Appareil de cuisson comportant un châssis de support (2) portant une plaque de cuisson (1) associée à un élément chauffant (3) disposé en dessous de celle-ci, l'élément chauffant (3) étant constitué par une résistance électrique et étant relié à un circuit électrique d'alimentation pouvant être branché sur le réseau électrique en vue de l'alimentation de l'élément chauffant pour chauffer la plaque de cuisson (1) afin de permettre la cuisson d'aliments disposés sur la plaque, **caractérisé en ce que** l'élément chauffant (3) repose sur une plaque auxiliaire (4) et se trouve pris entre la plaque de cuisson (1) et cette plaque auxiliaire (4) reposant sur le châssis (2), **en ce que** la plaque de cuisson (1) et la plaque auxiliaire (4) sont réalisées dans des matériaux présentant des caractéristiques de dilatation thermique voisines et sont sensiblement de même épaisseur, et **en ce que** l'espace entre les deux plaques (1, 4) est fermé tout en gardant un léger jeu pour faciliter l'enlèvement de la plaque de cuisson (1).

2. Appareil de cuisson selon la revendication 1, **caractérisé en ce que** la plaque de cuisson (1) est sur sa face tourné vers la plaque auxiliaire (4) pourvue d'une jupe (5) refermant la périphérie de l'espace entre les deux plaques (1, 4).

3. Appareil de cuisson selon la revendication 1 ou 2, **caractérisé en ce que** la plaque de cuisson (1) est posée sur l'élément chauffant (3) de manière détachable.

4. Appareil de cuisson selon l'une quelconque des revendications précédentes, dans lequel la température de la plaque est réglée à l'aide d'un thermostat (6) pourvu d'une sonde de température (11), **caractérisé en ce que** la sonde de température (11) est disposée entre les deux plaques (1, 4).

5. Appareil de cuisson selon la revendication 4, **caractérisé en ce que** la sonde de température (11) est disposée au moins partiellement dans un logement (13) pratiqué dans la plaque de cuisson (1).

6. Appareil de cuisson selon l'une quelconque des revendications précédentes, **caractérisé en ce que** le châssis (2) est en forme de boîte comportant sur sa face inférieure (16) des orifices d'entrée d'air (17, 18, 24) et sur sa face supérieure (15) des orifices de sortie d'air (19, 20).

7. Appareil de cuisson selon la revendication 6, **caractérisé en ce qu'**un plateau formant déflecteur (2') est disposé entre la plaque auxiliaire (4) et la face supérieure (15) du châssis (2).

8. Appareil de cuisson selon la revendication 6, **caractérisé en ce que** le châssis (2) comporte une double paroi latérale (22, 23), l'espace délimité entre les parois de celle-ci communiquant avec les orifices d'entrée et de sortie d'air (24 ; 20).

9. Appareil de cuisson selon la revendication 8, **caractérisé en ce que** la double paroi est constituée par une virole externe (22) et une virole interne (23), la virole interne (22) ayant une hauteur inférieure à celle de la virole externe (23) afin de permettre à l'air de circuler aussi bien dans l'espace délimité entre les parois que dans l'espace à l'intérieur du châssis (2), de l'autre côté de la virole interne (23).

10. Appareil de cuisson selon l'une quelconque des revendications précédentes, **caractérisé en ce qu'**une pluralité d'orifices de sortie d'air (19) est disposée dans une zone centrale d'une paroi supérieure (15) du châssis (2).

11. Appareil de cuisson selon l'une quelconque des revendications précédentes, **caractérisé en ce que** les orifices d'entrée d'air comprennent une fente (18, 24) ménagée sur la face inférieure du châssis (2) et s'étendant parallèlement au contour de cette face inférieure, et **en ce que** les orifices de sortie d'air comprennent une fente (20) ménagée sur la face supérieure du châssis et s'étendant parallèlement au contour de cette face supérieure.

12. Appareil de cuisson selon l'une quelconque des revendications précédentes, **caractérisé en ce que** les orifices d'entrée d'air comprennent des fentes (17) ménagées dans une paroi inférieure (16) du châssis.

## Patentansprüche

1. Bratvorrichtung mit einem Traggestell (2), auf dem eine Bratplatte (1) ruht, die mit einem unter ihr angeordneten Heizelement (3) verbunden ist, wobei das Heizelement (3) von einem elektrischen Widerstand gebildet wird und mit einem elektrischen Stromversorgungskreis verbunden ist, der zur Stromversorgung des Heizelements an das elektrische Stromnetz angeschlossen werden kann, so dass die Bratplatte (1) beheizt wird, um Lebensmittel, die auf die Platte gelegt werden, braten zu können,
**dadurch gekennzeichnet,**
**dass** das Heizelement (3) auf einer Unterplatte (4) aufliegt und zwischen der Bratplatte (1) und dieser auf dem Traggestell (2) ruhenden Unterplatte (4) eingeschlossen ist, dass die Bratplatte (1) und die Unterplatte (4) aus Werkstoffen mit ähnlichen Wärmedehnungseigenschaften ausgeführt sind und im wesentlichen die gleiche Stärke aufweisen, und dass der Zwischenraum zwischen den beiden Platten (1, 4) unter Wahrung eines kleinen Spiels geschlossen ist, um das Abnehmen der Bratplatte (1) zu erleichtern.

2. Bratvorrichtung nach Anspruch 1,
**dadurch gekennzeichnet,**
**dass** die Bratplatte (1) auf ihrer der Unterplatte (4) zugewendeten Seite mit einem Kragen (5) versehen ist, der den Zwischenraum zwischen den beiden Platten (1, 4) an der Umfangslinie umlaufend verschließt.

3. Bratvorrichtung nach Anspruch 1 oder 2,
**dadurch gekennzeichnet,**
**dass** die Bratplatte (1) lösbar auf dem Heizelement (3) angebracht wird.

4. Bratvorrichtung nach einem der vorherigen Ansprüche, wobei die Temperatur der Platte mittels eines Thermostats (6) geregelt wird, der mit einem Temperaturfühler (11) versehen ist,
**dadurch gekennzeichnet,**
**dass** der Temperaturfühler (11) zwischen den beiden Platten (1, 4) angeordnet ist.

5. Bratvorrichtung nach Anspruch 4,
**dadurch gekennzeichnet,**
**dass** der Temperaturfühler (11) zumindest teilweise in einer Aufnahme (13) angeordnet ist, die in der Bratplatte (1) vorgesehen ist.

6. Bratvorrichtung nach einem der vorherigen Ansprüche,
**dadurch gekennzeichnet,**
**dass** das Traggestell (2) kastenförmig ausgeführt ist und an seiner Unterseite (16) Lufteinlassöffnungen (17, 18, 24) und an seiner Oberseite (15) Luftauslassöffnungen (19, 20) aufweist.

7. Bratvorrichtung nach Anspruch 6,
**dadurch gekennzeichnet,**
**dass** zwischen der Unterplatte (4) und der Oberseite (15) des Traggestells (2) eine Umlenkplatte (2') angeordnet ist.

8. Bratvorrichtung nach Anspruch 6,
**dadurch gekennzeichnet,**
**dass** das Traggestell (2) eine doppelte Seitenwand (22, 23) enthält, wobei der von deren Wänden umschlossene Zwischenraum mit den Lufteinlass- und -auslassöffnungen (24; 20) kommuniziert.

9. Bratvorrichtung nach Anspruch 8,
**dadurch gekennzeichnet,**
**dass** die doppelte Seitenwand aus einem Außenmantel (22) und aus einem Innenmantel (23) besteht, wobei der Innenmantel (23) eine geringere Höhe besitzt als der Außenmantel (22), so dass die Luft sowohl in dem Zwischenraum zwischen den Wänden wie auch in dem Raum im Inneren des Traggestells (2) jenseits des Innenmantels (23) zirkulieren kann.

10. Bratvorrichtung nach einem der vorherigen Ansprüche,
**dadurch gekennzeichnet,**
**dass** in einem zentralen Bereich einer oberen Wand (15) des Traggestells (2) eine Vielzahl von Luftauslassöffnungen (19) angeordnet ist.

11. Bratvorrichtung nach einem der vorherigen Ansprüche,
**dadurch gekennzeichnet,**
**dass** die Lufteinlassöffnungen aus einem Schlitz (18, 24) bestehen, der in der Unterseite des Traggestells (2) ausgeführt ist und sich parallel zur Außenlinie dieser Unterseite erstreckt, und dass die Luftauslassöffnungen aus einem Schlitz (20) bestehen, der in der Oberseite des Traggestells ausgeführt ist und sich parallel zur Außenlinie dieser Oberseite erstreckt.

12. Bratvorrichtung nach einem der vorherigen Ansprüche,
**dadurch gekennzeichnet,**
**dass** die Lufteinlassöffnungen aus Schlitzen (17) bestehen, die in einer unteren Wand (16) des Traggestells (2) ausgeführt sind.

## Claims

1. Cooking apparatus comprising a supporting frame (2) carrying a cooking plate (1) associated with a heating element (3) disposed below the cooking plate (1), the heating element (3) consisting of an electrical resistance and being connected to an electrical power supply circuit which may be connected to the electrical network to supply the heating element with power to heat the cooking plate (1) and thus allow the cooking of foods disposed on the plate, **characterised in that** the heating element (3) rests on an auxiliary plate (4) and is held between the cooking plate (1) and this auxiliary plate (4) resting on the frame (2), **in that** the cooking plate (1) and the auxiliary plate (4) are produced from materials having similar characteristics of thermal expansion and are substantially of the same thickness and **in that** the space between the two plates (1, 4) is closed while maintaining slight play to facilitate removal of the cooking plate (1).

2. Cooking apparatus according to claim 1, **characterised in that** the cooking plate (1) is provided, on its face turned toward the auxiliary plate (4), with a skirt (5) closing the periphery of the space between the two plates (1, 4).

3. Cooking apparatus according to claim 1 or 2, **characterised in that** the cooking plate (1) is placed in a detachable manner on the heating element (3).

4. Cooking apparatus according to any of the preceding claims, in which the temperature of the plate is controlled by means of a thermostat (6) provided with a temperature gauge (11), **characterised in that** the temperature gauge (11) is disposed between the two plates (1, 4).

5. Cooking apparatus according to claim 4, **characterised in that** the temperature gauge (11) is disposed at least partially in a recess (13) made in the cooking plate (1).

6. Cooking apparatus according to any of the preceding claims, **characterised in that** the frame (2) is in the form of a box comprising air inlet orifices (17, 18, 24) on its lower face (16) and air outlet orifices (19, 20) on its upper face (15).

7. Cooking apparatus according to claim 6, **characterised in that** a plate forming a deflector (2') is disposed between the auxiliary plate (4) and the upper face (15) of the frame (2).

8. Cooking apparatus according to claim 6, **characterised in that** the frame (2) comprises a double side wall (22, 23), the space delimited between the walls thereof communicating with the air inlet and outlet orifices (24; 20).

9. Cooking apparatus according to claim 8, **characterised in that** the double wall consists of an external rim (22) and an internal rim (23), the internal rim (22) having a smaller height than the external rim (23) to enable the air to circulate both in the space delimited between the walls and the space inside the frame (2), on the other side of the internal rim (23).

10. Cooking apparatus according to any of the preceding claims, **characterised in that** a plurality of air outlet orifices (19) is disposed in a central zone of an upper wall (15) of the frame (2).

11. Cooking apparatus according to any of the preceding claims, **characterised in that** the air inlet orifices comprise a slot (18, 24) made on the lower face of the frame (2) and extending parallel to the contour of this lower face and **in that** the air outlet orifices comprise a slot (20) made on the upper face of the frame and extending parallel to the contour of this upper face.

12. Cooking apparatus according to any of the preceding claims, **characterised in that** the air inlet orifices comprise slots (17) made in a lower wall (16) of the frame.
